(19) Europäisches Patentamt
European Patent Office
Office européen des brevets

(11) **EP 2 802 164 A2**

(12) **EUROPEAN PATENT APPLICATION**
published in accordance with Art. 153(4) EPC

(43) Date of publication:
**12.11.2014 Bulletin 2014/46**

(51) Int Cl.:
**H04W 4/24** (2009.01)

(21) Application number: **12734049.5**

(22) Date of filing: **27.02.2012**

(86) International application number:
**PCT/CN2012/071660**

(87) International publication number:
**WO 2012/095049 (19.07.2012 Gazette 2012/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Huawei Technologies Co., Ltd.**
**Shenzhen, Guangdong 518129 (CN)**

(72) Inventor: **ZHU, Xiaolong**
**Guangdong 518129 (CN)**

(74) Representative: **Thun, Clemens et al**
**Mitscherlich PartmbB**
**Patent- und Rechtsanwälte**
**Sonnenstraße 33**
**80331 München (DE)**

(54) **MIMO MODE CONFIGURATION METHOD AND COMMUNICATION DEVICE**

(57) Embodiments of the present invention provide a MIMO mode configuration method and a communication device, which relate to the field of communications, and are capable of reducing mutual channel interference when users in neighboring cells and on the same channel perform transmission by using configured MIMO mode, thereby improving system performance. The method includes: calculating, under each predetermined MIMO mode combination in a cluster, throughput or an amount of interference of the cluster; and setting, in a predetermined MIMO mode combination corresponding to maximum throughput or a minimum amount of interference of the cluster, a predetermined MIMO mode of each user in the cluster to an actual MIMO mode of the user. The embodiments of the present invention are applied to MIMO mode configuration for a user in a cell.

```
┌─────────────────────────────────────────────────┐
│   Calculate, under each predetermined MIMO mode  │
│    combination in a cluster, throughput or an    │──── 101
│           amount of interference of the cluster  │
└─────────────────────────────────────────────────┘
                         │
                         ▼
┌─────────────────────────────────────────────────┐
│   Set, in a predetermined MIMO mode combination  │
│   corresponding to maximum throughput or a       │
│   minimum amount of interference of the cluster, │──── 102
│   a predetermined MIMO mode of each user in the  │
│   cluster to an actual MIMO mode of the user     │
└─────────────────────────────────────────────────┘
```

FIG. 1

EP 2 802 164 A2

**Description**

**FIELD OF THE INVENTION**

The present invention relates to the field of communications, and in particular, to a MIMO mode configuration method and a communication device.

**BACKGROUND OF THE INVENTION**

By configuring multiple antennas at a transmitting end and a receiving end, the multiple-input multiple-output (Multiple-Input Multiple-output, MIMO) technology multiplies the radio channel capacity without increasing system bandwidth and antenna transmit power, and therefore becomes a key technology of future radio communications. Currently, common transmission modes of the MIMO technology include transmit diversity, spatial multiplexing, and beam forming. In addition, the MIMO technology is classified into an open-loop MIMO mode and a closed-loop MIMO mode according to whether the receiving end feeds back channel quality information to a sending end. The transmit diversity improves system performance by reducing error codes and is generally used in a scenario with poor channel conditions, for example, a channel SINR (Signal to Interference plus Noise Ratio, signal to interference plus noise ratio) is low and channel correlation is strong. The spatial multiplexing improves system performance by improving a data transmission rate and is generally used in a scenario with good channel conditions, for example, an SNR (Signal to Noise Ratio, signal to noise ratio) is high and channel correlation is low. The beam forming is used in a scenario with strong channel correlation. The closed-loop MIMO mode relies on the channel quality feedback of the receiving end, and therefore is generally used in a low-rate scenario.

Different MIMO modes are applicable to different channel conditions, so it is necessary to configure proper MIMO modes according to the different channel conditions so to as obtain optimal system performance. In the prior art, a system configures MIMO modes for users in cells or sectors separately according to CQIs (Channel quality indicator, channel quality indicator) of users served in the cells and/or channel correlation measurement of a base station.

During the implementation of the MIMO mode configuration, the inventor finds that the prior art at least has the following problem: the system separately configures a MIMO mode for a user in a cell without considering channel interference on a user that is in a neighboring cell and is on the same channel when the user transmits information by using the configured MIMO mode.

**SUMMARY OF THE INVENTION**

Embodiments of the present invention provide a MIMO mode configuration method and a communication device, which are capable of reducing mutual channel interference when users in neighboring cells and on the same channel perform transmission by using configured MIMO modes, thereby improving system performance.

In an aspect, the present invention provides a MIMO mode configuration method, including:

calculating, under each predetermined MIMO mode combination in a cluster, throughput or an amount of interference of the cluster, where the predetermined MIMO mode combination is a collection of predetermined MIMO modes pre-configured for all users in all cells of the cluster, and the predetermined MIMO modes are MIMO modes that can be adopted by the users; and
setting, in a predetermined MIMO mode combination corresponding to maximum throughput or a minimum amount of interference of the cluster, a predetermined MIMO mode of each user in the cluster to an actual MIMO mode of the user.

In another aspect, the present invention provides a MIMO mode configuration method, including:

determining a designated cell in a cluster;
determining one or more cells other than the designated cell in the cluster as a selected cell and calculating total throughput or a total amount of interference of the designated cell and the selected cell under each predetermined MIMO mode combination of the selected cell, where the predetermined MIMO mode combination is a collection of predetermined MIMO modes pre-configured for all users in the selected cell of the cluster, and the predetermined MIMO modes are MIMO modes that can be adopted by the users; and
setting, in a predetermined MIMO mode combination corresponding to maximum throughput or a minimum amount of interference of the designated cell and the selected cell in the cluster, a predetermined MIMO mode of each user in the selected cell to an actual MIMO mode of the user.

In another aspect, the present invention provides a communication device, including:

a processor, configured to calculate, under each predetermined MIMO mode combination in a cluster, throughput or an amount of interference of the cluster, where the predetermined MIMO mode combination is a collection of predetermined MIMO modes pre-configured for all users in all cells of the cluster, and the predetermined MIMO modes are MIMO modes that can be adopted by the users;
the processor is further configured to set, in a predetermined MIMO mode combination corresponding to maximum throughput or a minimum amount of interference of the cluster, a predetermined MIMO mode of each user in the cluster to an actual MIMO mode of the user.

In another aspect, the present invention provides a communication device, including:

a processor, configured to determine a designated cell in a cluster, where the cluster is formed by at least two cells;

the processor is further configured to determine one or more cells other than the designated cell in the cluster as a selected cell and calculate total throughput or a total amount of interference of the designated cell and the selected cell under each predetermined MIMO mode combination of the selected cell, where the predetermined MIMO mode combination is a collection of predetermined MIMO modes pre-configured for all users in the selected cell in the cluster, and the predetermined MIMO modes are MIMO modes that can be adopted by the users; and

the processor is further configured to set, in a predetermined MIMO mode combination corresponding to maximum throughput or a minimum amount of interference of the designated cell and the selected cell in the cluster, a predetermined MIMO mode of each user in the selected cell to an actual MIMO mode of the user.

The MIMO mode configuration method and the communication device provided in the above technical solutions are capable of uniting multiple cells to configure MIMO modes for users, thereby reducing mutual channel interference when users in neighboring cells and on the same channel perform transmission by using configured MIMO modes, and further improving system performance.

**BRIEF DESCRIPTION OF THE DRAWINGS**

To describe the technical solutions in the embodiments of the present invention or in the prior art more clearly, the following briefly introduces the accompanying drawings required for describing the embodiments or the prior art. Apparently, the accompanying drawings in the following descriptions show merely some embodiments of the present invention, and persons of ordinary skill in the art may still derive other drawings from the accompanying drawings without creative efforts.

FIG. 1 is a schematic flow chart of a MIMO mode configuration method according to an embodiment of the present invention;
FIG. 2 is a structural block diagram of a communication device according to an embodiment of the present invention; and
FIG. 3 is a schematic flow chart of a MIMO mode configuration method according to another embodiment of the present invention.

**DETAILED DESCRIPTION OF THE EMBODIMENTS**

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

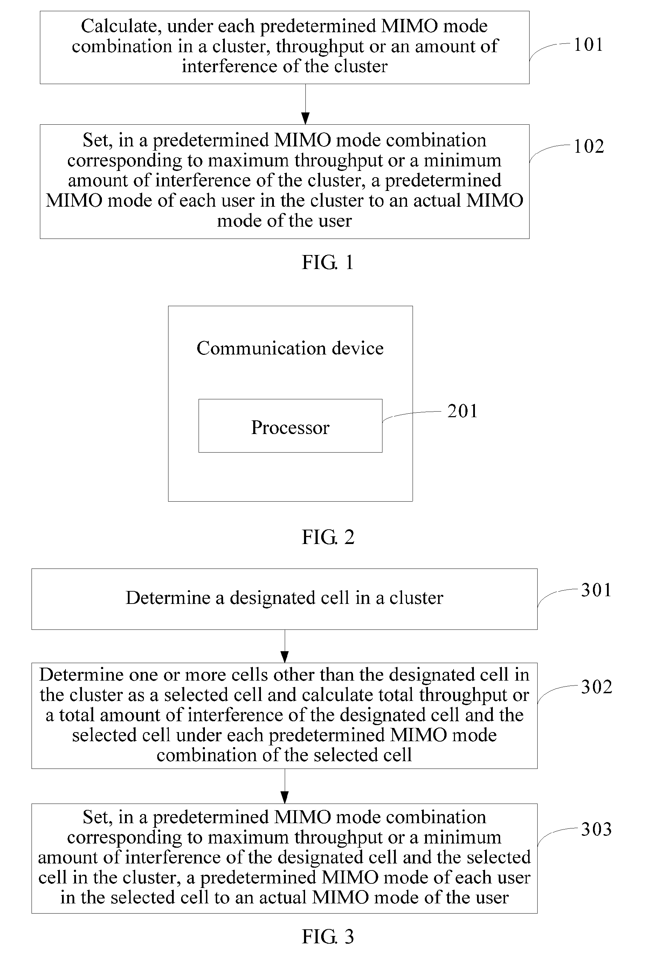

An embodiment of the present invention provides a MIMO mode configuration method. As shown in FIG. 1, the method includes the following steps:

101: Calculate, under each predetermined MIMO mode combination in a cluster, throughput or an amount of interference of the cluster.

In this embodiment, the cluster is formed by at least two cells. The cells in the cluster may be multiple cells in which every cell is adjacent to at least two other cells, or may be multiple cells in which every cell is interconnected with at least one other cell. The cells in the cluster may be multiple cells belonging to different base stations, or may be multiple cells belonging to the same base station, which depends on specific situations and is not limited herein.

In each cluster, a communication device for configuring MIMO modes for users in the cluster is configured. Each communication system has such a communication device configured to manage and control multiple base stations, which belongs to the prior art.

The predetermined MIMO mode combination is a collection of predetermined MIMO modes pre-configured for all users in all cells of the cluster. The predetermined MIMO modes are MIMO modes that can be adopted by the users. It is assumed that, in a communication system, the number of types of MIMO modes configured for the users is N (N > 1), which is fixed. For each user in each cell of the cluster, a MIMO mode configuration unit may randomly select one of the fixed N types of MIMO modes as a predetermined MIMO mode of the user. The predetermined MIMO modes each time selected by the MIMO mode configuration unit for all the users in the cluster are combined together as a predetermined MIMO mode combination. The system has N types of MIMO modes, so each user has multiple types of predetermined MIMO modes, and therefore there are multiple types of predetermined MIMO mode combinations.

In this embodiment, the communication device may obtain channel correlation information of each user in each cell of the cluster from a serving base station of the cell in the cluster. The channel correlation information includes at least one of: a channel response matrix, a CQI (Channel Quality Indicator, channel quality indicator), a PMI (Precoding Matrix Indicator, precoding matrix indicator), and an RI (Rank Indicator, rank indicator). Of course, the channel correlation information includes, but is not limited to, the above types. Persons skilled in the art clearly understand the channel correlation information, which is not limited herein. The channel correlation information may be measured by the base station, or may be fed back by a user in a cell of the cluster to the base station.

The communication device may utilize the channel correlation information to calculate the throughput or the amount of interference of the cluster under each predetermined MIMO mode combination. For example, first, the throughput of a user is calculated according to the channel correlation information of the user, namely, at least one of the channel response matrix, the CQI, the PMI, the RI, and the like. Then, the throughput of all users in the cluster is added to obtain the throughput of the cluster. In the same manner, the amount of interference of a designated cell in the cluster may be calculated first, and then the amount of interference of a selected cell in the cluster may be calculated.

Optionally, the throughput of the user is calculated according to the following algorithm:

A formula for calculating the throughput of the user is $T = \sum_{j=1}^{S} f_s \log_2(1 + \gamma_j)$, where $f_s$ is bandwidth, S is the number of data streams, and $\gamma_j$ is a receive SINR (Signal to Interference plus Noise Ratio, signal to interference plus noise ratio) of a $j^{th}$ antenna.

When the channel correlation information is a CQI and an RI, S = RI + 1, and $\gamma_j = kCQI_j + b$, where $CQI_j$ is a CQI reported by a user and received by the $j^{th}$ antenna, and k and b are linear fitting parameters between the CQI and the SINR.

When the channel correlation information is a channel response matrix, the calculation method varies with different receiver types. An MMSE receiver is taken as an example herein. It is assumed that two antennas are configured for transmission and two antennas are configured for reception. When a MIMO mode of a user of a local cell is SFBC and MIMO modes of users of all neighboring cells are SFBC, S = 2. Then,

$$\gamma_j = \vec{h}_{j,1}^{H}\left(\sigma^2 I + \sum_{m=2}^{M} H_m H_m^H\right)^{-1}\vec{h}_{j,1}, \text{ where } M \text{ is}$$

the number of interference neighboring cells of the local cell, $H_m$ is a reconstructed channel matrix of an $m^{th}$ neighboring cell, and sub-carrier k and k+1 are two successive sub-carriers for transmission, which are recorded as sub-carriers k and k+1.

$$H_m = \begin{bmatrix} h_{11,m}^{(k)*}, -h_{12,m}^{(k)*} \\ h_{21,m}^{(k)*}, -h_{22,m}^{(k)*} \\ h_{12,m}^{(k+1)}, h_{12,m}^{(k+1)} \\ h_{22,m}^{(k+1)}, h_{21,m}^{(k+1)} \end{bmatrix}$$

$h_{ij,m}^{k}$ is a channel gain from a $j^{th}$ transmitting antenna to an $m^{th}$ receiving antenna of m antennas of a neighboring base station on a $k^{th}$ sub-carrier; $\vec{h}_{j,1}$ is a $j^{th}$ column of the reconstructed channel matrix of the local cell and is obtained by the channel response matrix of the local cell. $\sigma^2$ is noise power, I is a unit matrix, and $x^H$ or $x^*$ indicates conjugate calculation.

The algorithm for calculating the throughput of the user varies with different situations, which is not described in detail herein again.

102: Set, in a predetermined MIMO mode combination corresponding to maximum throughput or a minimum amount of interference of the cluster, a predetermined MIMO mode of each user in the cluster to an actual MIMO mode of the user.

Each predetermined MIMO mode combination corresponds to throughput or an amount of interference of the cluster. The predetermined MIMO mode combination corresponding to the maximum throughput or the minimum amount of interference of the cluster is a combination of MIMO modes that need to be configured for users in the cluster when system performance is optimal. The communication device may send a predetermined MIMO mode of each user in each cell to a home base station of the cell, where each cell is in the predetermined MIMO mode combination corresponding to the maximum throughput or the minimum amount of interference of the cluster. The base station configures an actual MIMO mode for each user of the cells in the cluster.

The embodiment also provides a communication device, which may be configured to implement the method provided in the above method embodiment. The device may be an access network device such as an RNC (Radio Network Controller, radio network controller) and a BSC (Base Station Controller, base station controller) in a communication system or other devices capable of configuring MIMO modes for users. As shown in FIG. 2, the communication device includes: a processor 201.

The processor 201 is configured to calculate, under each predetermined MIMO mode combination in a cluster, throughput or an amount of interference of the cluster. The predetermined MIMO mode combination is a collection of predetermined MIMO modes pre-configured for all users in all cells of the cluster. The predetermined MIMO modes are MIMO modes that can be adopted by the users.

In this embodiment, a communication device is configured in each cluster. The communication device may manage and control multiple base stations, which belongs to the prior art.

It is assumed that, in a communication system, the number of types of MIMO modes configured for the users is N (N > 1), which is fixed. For each user in each cell of the cluster, a MIMO mode configuration unit may randomly select one of the fixed N types of MIMO modes as a predetermined MIMO mode of the user. The predetermined MIMO modes each time selected by the MIMO mode configuration unit for all the users in the cluster are combined together as a predetermined MIMO mode combination. The system has N types of MIMO modes, so each user has multiple types of predetermined MIMO modes, and therefore there are multiple types of predetermined MIMO mode combinations.

Optionally, the processor 201 in the communication device may obtain channel correlation information of each user in each cell of the cluster from a serving base station of the cell in the cluster. The channel correlation information includes at least one of: a channel response matrix, a CQI, a PMI, and an RI. Of course, the channel correlation information includes, but is not limited to, the above types. Persons skilled in the art clearly understand the channel correlation information, which is not limited herein. The channel correlation information may be measured by the base station, or may be fed back by a user in a cell of the cluster to the base station.

Optionally, the processor 201 may utilize the channel correlation information to calculate the throughput or the amount of interference of the cluster under each predetermined MIMO mode combination. For example, first, the throughput of a user is calculated according to the channel correlation information of the user, namely, at least one of the channel response matrix, the CQI, the PMI, the RI, and the like. Then, the throughput of all users in the cluster is added to obtain the throughput of the cluster. In the same manner, the amount of interference of a designated cell in the cluster may be calculated first, and then the amount of interference of a selected cell in the cluster may be calculated.

Optionally, the processor 201 calculates the throughput of the user according to the following algorithm.

A formula for calculating the throughput of the user is $T = \sum_{j=1}^{S} f_s \log_2(1 + \gamma_j)$, where $f_s$ is bandwidth, S is the number of data streams, and $\gamma_j$ is a receive SINR (Signal to Interference plus Noise Ratio, signal to interference plus noise ratio) of a $j^{th}$ antenna.

When the channel correlation information is a CQI and an RI, S = RI + 1, and $\gamma_j = kCQI_j + b$, where $CQI_j$ is a CQI reported by a user and received by the $j^{th}$ antenna, and k and b are linear fitting parameters between the CQI and the SINR.

When the channel correlation information is a channel response matrix, the calculation method varies with different receiver types. An MMSE receiver is taken as an example herein. It is assumed that two antennas are configured for transmission and two antennas are configured for reception. When a MIMO mode of a user of a local cell is SFBC and MIMO modes of users of all neighboring cells are SFBC, S = 2. Then,

$\gamma_j = \vec{h}_{j,1}^H (\sigma^2 I + \sum_{m=2}^{M} H_m H_m^H)^{-1} \vec{h}_{j,1}$, where $M$ is the number of interference neighboring cells of the local cell, $H_m$ is a reconstructed channel matrix of an $m^{th}$ neighboring cell, and sub-carrier k and k+1 are two successive sub-carriers for transmission, which are recorded as sub-carriers k and k+1.

$$H_m = \begin{bmatrix} h_{11,m}^{(k)*}, -h_{12,m}^{(k)*} \\ h_{21,m}^{(k)*}, -h_{22,m}^{(k)*} \\ h_{12,m}^{(k+1)}, h_{12,m}^{(k+1)} \\ h_{22,m}^{(k+1)}, h_{21,m}^{(k+1)} \end{bmatrix}$$

$h_{ij,m}^k$ is a channel gain from a $j^{th}$ transmitting antenna to an $m^{th}$ receiving antenna of m antennas of a neighboring base station on a $k^{th}$ sub-carrier; $\vec{h}_{j,1}$ is a $j^{th}$ column of the reconstructed channel matrix of the local cell and is obtained by the channel response matrix of the local cell. $\sigma^2$ is noise power, $I$ is a unit matrix, and $x^H$ or $x^*$ indicates conjugate calculation.

The algorithm for calculating the throughput of the user varies with different situations, which is not described in detail herein again.

Optionally, the processor 201 is further configured to set, in a predetermined MIMO mode combination corresponding to maximum throughput or a minimum amount of interference of the cluster, a predetermined MIMO mode of each user in the cluster to an actual MIMO mode of the user.

Each predetermined MIMO mode combination corresponds to throughput or an amount of interference of the cluster. The predetermined MIMO mode combination corresponding to the maximum throughput or the minimum amount of interference of the cluster is a combination of MIMO modes that need to be configured for users in the cluster when system performance is optimal. The processor 201 sends a predetermined MIMO mode of each user in each cell in the predetermined MIMO mode combination corresponding to the maximum throughput or the minimum amount of interference of the cluster to a home base station of the cell. The base station configures an actual MIMO mode for each user of the cell in the cluster.

The processor 201 in this embodiment may be formed by two sub-processors. The two sub-processors are configured to execute step 101 and step 102 in the method implemented by the processor, respectively.

In the MIMO mode configuration method and the communication device provided in the embodiments of the present invention, the throughput or the amount of interference of the cluster is calculated under each predetermined MIMO mode combination in the cluster, and in the predetermined MIMO mode combination corresponding to the maximum throughput or the minimum amount of interference of the cluster, a predetermined MIMO mode of each user in the cluster is set to the actual MIMO mode of the user. Multiple cells are united to configure MIMO modes for users, thereby reducing mutual channel interference when users in neighboring cells and on the same channel perform transmission by using configured MIMO modes, and further improving system performance.

Another embodiment of the present invention provides a MIMO mode configuration method. As shown in FIG. 3, the method includes the following steps.

301: Determine a designated cell in a cluster.

In this embodiment, the cluster is formed by at least two cells. The cells in the cluster may be multiple cells in which every cell is adjacent to at least two other cells, or may be multiple cells in which every cell is interconnected with at least one other cell. The cells in the cluster may be multiple cells belonging to different base stations, or may be multiple cells belonging to the same base station, which depends on specific situations, and is not limited herein.

In this embodiment, a communication device is configured in each cluster. The communication device is configured to manage and control multiple base stations, which belongs to the prior art. The communication device may obtain channel correlation information of each user in each cell of the cluster from a serving base station of the cells in the cluster. The channel correlation information includes at least one of: a channel response matrix, a CQI, a PMI, and an RI. Of course, the channel correlation information includes, but is not limited to, the above types. Persons skilled in the art clearly understand the channel correlation information, which is not limited herein. The channel correlation information may be measured by the base station, or may be fed back by a user in a cell of the cluster to the base station.

When a MIMO mode is not configured for each user in each cell of the cluster initially, a cell is randomly selected from the cluster, and based on the prior art, a MIMO mode is separately configured for each user in the cell according to channel correlation information of the users in the cell. The cell where MIMO modes are configured is determined as a designated cell.

When a cell where a MIMO mode is configured for each user exists in the cluster, the cell where the user for which a MIMO mode is configured is located is determined as a designated cell.

302: Determine one or more cells other than the designated cell in the cluster as a selected cell and calculate total throughput or a total amount of interference of the designated cell and the selected cell under each predetermined MIMO mode combination of the selected cell.

The predetermined MIMO mode combination is a collection of predetermined MIMO modes pre-configured for all users in the selected cell of the cluster. The predetermined MIMO modes are MIMO modes that can be adopted by the users. It is assumed that, in a communication system, the number of types of MIMO modes configured for the users is N (N > 1), which is fixed. For each user in each cell of the cluster, a MIMO mode configuration unit may randomly select one of the fixed N types of MIMO modes as a predetermined MIMO mode of the user. The predetermined MIMO modes each time selected by the MIMO mode configuration unit for all the users in the selected cell of the cluster are combined together as a predetermined MIMO mode combination. The system has N types of MIMO modes, so each user has multiple types of predetermined MIMO modes, and therefore there are multiple types of predetermined MIMO mode combinations.

Optionally, the communication device may utilize the channel correlation information to calculate the throughput or the amount of interference of the cluster under each predetermined MIMO mode combination. For example, first, the throughput of a user is calculated according to the channel correlation information of the user, namely, at least one of a channel response matrix, a CQI, a PMI, an RI, and the like. Then, the throughput of all users in the designated cell and the throughput of all users in the selected cell of the cluster are added together to obtain the throughput of the designated cell and the selected cell in the cluster. In the same manner, the amount of interference of the designated cell in the cluster may be calculated first, and then the amount of interference of the selected cell in the cluster may be calculated.

Optionally, the throughput of the user is calculated according to the following algorithm.

A formula for calculating the throughput of the user is $T = \sum_{j=1}^{S} f_s \log_2(1 + \gamma_j)$, where S is the number of data streams, $f_s$ is bandwidth, and $\gamma_j$ is a receive SINR (Signal to Interference plus Noise Ratio, signal to interference plus noise ratio) of a $j^{th}$ antenna.

When the channel correlation information is a CQI and an RI, S = RI + 1, and $\gamma_j = kCQI_j + b$, where $CQI_j$ is a CQI reported by a user and received by the $j^{th}$ antenna, and k and b are linear fitting parameters between the CQI and the SINR.

When the channel correlation information is a channel response matrix, the calculation method varies with different receiver types. An MMSE receiver is taken as an example herein. It is assumed that two antennas are configured for transmission and two antennas are configured for reception. When a MIMO mode of a user of a local cell is SFBC and MIMO modes of users of all neighboring cells are SFBC, S = 2. Then,

$$\gamma_j = \vec{h}_{j,1}^H (\sigma^2 I + \sum_{m=2}^{M} H_m H_m^H)^{-1} \vec{h}_{j,1},$$ where $M$ is the number of interference neighboring cells of the local cell, $H_m$ is a reconstructed channel matrix of an $m^{th}$ neighboring cell, and sub-carrier k and k+1 are two successive sub-carriers for transmission, which are recorded as sub-carriers k and k+1.

$$H_m = \begin{bmatrix} h_{11,m}^{(k)*}, -h_{12,m}^{(k)*} \\ h_{21,m}^{(k)*}, -h_{22,m}^{(k)*} \\ h_{12,m}^{(k+1)}, h_{12,m}^{(k+1)} \\ h_{22,m}^{(k+1)}, h_{21,m}^{(k+1)} \end{bmatrix}$$

$h_{ij,m}^k$ is a channel gain from a j$^{th}$ transmitting antenna to an m$^{th}$ receiving antenna of m antennas of a neighboring base station on a k$^{th}$ sub-carrier; $\vec{h}_{j,1}$ is a j$^{th}$ column of the reconstructed channel matrix of the local cell and is obtained by the channel response matrix of the local cell. $\sigma^2$ is noise power, $I$ is a unit matrix, and $x^H$ or $x^*$ indicates conjugate calculation.

The algorithm for calculating the throughput of the user varies with different situations, which is not described in detail herein again.

303: Set, in a predetermined MIMO mode combination corresponding to maximum throughput or a minimum amount of interference of the designated cell and the selected cell in the cluster, a predetermined MIMO mode of each user in the selected cell to an actual MIMO mode of the user.

In this embodiment, each predetermined MIMO mode combination of a user in the selected cell corresponds to total throughput or a total amount of interference of the designated cell and the selected cell. The predetermined MIMO mode combination corresponding to the maximum total throughput or the minimum total amount of interference of the designated cell and the selected cell is a combination of MIMO modes that need to be configured for users in the selected cell of the cluster when system performance is optimal. The communication device may send a predetermined MIMO mode of each user in each selected cell to a home base station of the selected cell, where each selected cell is in the predetermined MIMO mode combination corresponding to the maximum total throughput or the minimum total amount of interference of the cluster. The base station configures an actual MIMO mode for each user in the selected cell of the cluster.

Optionally, after MIMO modes are configured for the users in the selected cell, steps 301-303 are continuously performed until a MIMO mode is configured for each user in each cell of the cluster.

An embodiment of the present invention further provides a communication device, which may be configured to implement the method provided in the above method embodiment. The device may be an access network device such as an RNC and a BSC in a communication system, or other devices capable of configuring MIMO modes for users. As shown in FIG. 2, the communication device includes: a processor 201.

The processor 201 is configured to determine a designated cell in a cluster, where the cluster is formed by at least two cells.

In this embodiment, when a MIMO mode is not configured for each user in each cell of the cluster initially, the processor 201 randomly selects a cell from the cluster, and based on the prior art, separately configures a MIMO mode for each user in the cell according to channel correlation information of the users in the cell, and determines the cell where MIMO modes are configured as a designated cell.

When a cell where a MIMO mode is configured for each user exists in the cluster, the processor 201 is configured to determine the cell where the user for which a MIMO mode is configured is located as a designated cell.

Optionally, the processor 201 is further configured to determine one or more cells other than the designated cell in the cluster as a selected cell and calculate total throughput or a total amount of interference of the designated cell and the selected cell under each predetermined MIMO mode combination of the selected cell. The predetermined MIMO mode combination is a collection of predetermined MIMO modes pre-configured for all users in the selected cell of the cluster. The predetermined MIMO modes are MIMO modes that can be adopted by the users.

Optionally, in a communication system, the number of types of MIMO modes configured for the users is N (N > 1), which is fixed. For each user in each cell of the cluster, a MIMO mode configuration unit may randomly select one of the fixed N types of MIMO modes as a predetermined MIMO mode of the user. The predetermined MIMO modes each time selected by the MIMO mode configuration unit for all the users in the selected cell of the cluster are combined together as a predetermined MIMO mode combination. The system has N types of MIMO modes, so each user has multiple types of predetermined MIMO modes, and therefore there are multiple types of the predetermined MIMO mode combinations.

Optionally, the processor 201 may utilize the channel correlation information to calculate the throughput or the amount of interference of the cluster under each predetermined MIMO mode combination. For example, first, the throughput of a user is calculated according to the channel correlation information of the user, namely, at least one of a channel response matrix, a CQI, a PMI, an RI, and the like. Then, the throughput of all users in the designated cell and the throughput of all users in the selected cell in the cluster are added together to obtain the throughput of the designated cell and the selected cell in the cluster. In the same manner, the amount of interference of the designated cell in the cluster may be calculated first, and then the amount of interference of the selected cell in the cluster may be calculated.

Optionally, the processor 201 calculates the throughput of the user according to the following algorithm.

A formula for calculating the throughput of the user is $T = \sum_{j=1}^{S} f_s \log_2(1 + \gamma_j)$, where S is the number of data streams, $f_s$ is bandwidth, and $\gamma_j$ is a receive SINR (Signal to Interference plus Noise Ratio, signal to interference plus noise ratio) of a $j^{th}$ antenna.

When the channel correlation information is a CQI and an RI, S = RI + 1, and $\gamma_j = kCQI_j + b$, where $CQI_j$ is a CQI reported by a user and received by the $j^{th}$ antenna, and k and b are linear fitting parameters between the CQI and the SINR.

The algorithm for calculating the throughput of the user varies with different situations, which is not described in detail herein again.

The processor 201 is further configured to set, in a predetermined MIMO mode combination corresponding to maximum throughput or a minimum amount of interference of the designated cell and the selected cell in the cluster, a predetermined MIMO mode of each user in the selected cell to an actual MIMO mode of the user.

In this embodiment, each predetermined MIMO mode combination of a user in the selected cell corresponds to total throughput or a total amount of interference of the designated cell and the selected cell. The predetermined MIMO mode combination corresponding to the maximum total throughput or the minimum total amount of interference of the designated cell and the selected cell is a combination of MIMO modes that need to be configured for users in the selected cell of the cluster when system performance is optimal. The processor 201 sends a predetermined MIMO mode of each user in each selected cell to a home base station of the selected cell, where each selected cell is in the predetermined MIMO mode combination corresponding to the maximum total throughput or the minimum total amount of interference of the cluster. The base station configures an actual MIMO mode for each user in the selected cell of the cluster.

Optionally, after MIMO modes are configured for the users in the selected cell, the processor 201 may continue to configure MIMO modes for users in cells where MIMO mode configuration is not performed in the cluster until a MIMO mode is configured for each user in each cell of the cluster.

The processor 201 in this embodiment may be formed by three sub-processors. The three sub-processors are configured to execute step 301, step 302, and step 303 in the method implemented by the processor, respectively.

In the MIMO mode configuration method and the communication device provided in the embodiments of the present invention, the total throughput or the total amount of interference of a determined designated cell and selected cell is calculated under each predetermined MIMO mode combination of the determined selected cell, and in the predetermined MIMO mode combination corresponding to the maximum throughput or the minimum amount of interference of the designated cell and the selected cell in the cluster, a predetermined MIMO mode of each user in the selected cell is set to the actual MIMO mode of the user, until MIMO modes are configured for all users in the cluster. Multiple cells are united to configure MIMO modes for users, thereby reducing mutual channel interference when users in neighboring cells and on the same channel perform transmission by using configured MIMO modes, and further improving system performance.

Persons of ordinary skill in the art may understand that all or part of the steps of the methods in the embodiments may be implemented by a program instructing relevant hardware. The program may be stored in a computer readable storage medium. When the program is run, the foregoing steps of the methods in the embodiments are performed. The storage medium may be any medium capable of storing program codes, such as ROM, RAM, magnetic disk, or optical disk.

The foregoing description is merely about the specific implementation of the present invention, but is not intended to limit the protection scope of the present invention. Any variation or replacement readily figured out by persons skilled in the art within the technical scope of the present invention shall fall within the protection scope of the present invention. Therefore, the protection scope of the present invention shall be subject to the protection scope of the claims.

**Claims**

1. A MIMO mode configuration method, comprising:

    calculating, under each predetermined MIMO mode combination in a cluster, throughput or an amount of interference of the cluster, wherein the predetermined MIMO mode combination is a collection of predetermined MIMO modes pre-configured for all users in all cells of the cluster, and the predetermined MIMO modes are MIMO modes that can be adopted by the users; and setting, in a predetermined MIMO mode combination corresponding to maximum throughput or a minimum amount of interference of the cluster, a predetermined MIMO mode of each user in the cluster to an actual MIMO mode of the user.

2. The method according to claim 1, wherein the cluster is formed by at least two cells.

3. A MIMO mode configuration method, comprising:

determining a designated cell in a cluster; determining one or more cells other than the designated cell in the cluster as a selected cell and calculating total throughput or a total amount of interference of the designated cell and the selected cell under each predetermined MIMO mode combination of the selected cell, wherein the predetermined MIMO mode combination is a collection of predetermined MIMO modes pre-configured for all users in the selected cell of the cluster, and the predetermined MIMO modes are MIMO modes that can be adopted by the users; and setting, in a predetermined MIMO mode combination corresponding to maximum throughput or a minimum amount of interference of the designated cell and the selected cell in the cluster, a predetermined MIMO mode of each user in the selected cell to an actual MIMO mode of the user.

4. The method according to claim 3, wherein the cluster is formed by at least two cells.

5. The method according to claim 3 or 4, wherein the determining the designated cell in the cluster comprises:

randomly selecting a cell in the cluster, configuring a MIMO mode for each user in the cell, and determining the cell where MIMO modes are configured for users as the designated cell; or determining, in the cluster, a cell where MIMO modes are already configured for users as the designated cell.

6. A communication device, comprising:

a processor, configured to calculate, under each predetermined MIMO mode combination in a cluster, throughput or an amount of interference of the cluster, wherein the predetermined MIMO mode combination is a collection of predetermined MIMO modes pre-configured for all users in all cells of the cluster, and the predetermined MIMO modes are MIMO modes that can be adopted by the users; the processor is further configured to set, in a predetermined MIMO mode combination corresponding to maximum throughput or a minimum amount of interference of the cluster, a predetermined MIMO mode of each user in the cluster to an actual MIMO mode of the user.

7. A communication device, comprising:

a processor, configured to determine a designated cell in a cluster; wherein the processor is further configured to determine one or more cells other than the designated cell in the cluster as a selected cell and calculate total throughput or a total amount of interference of the designated cell and the selected cell under each predetermined MIMO mode combination of the selected cell, wherein the predetermined MIMO mode combination is a collection of predetermined MIMO modes pre-configured for all users in the selected cell of the cluster, and the predetermined MIMO modes are MIMO modes that can be adopted by the users; the processor is further configured to set, in a predetermined MIMO mode combination corresponding to maximum throughput or a minimum amount of interference of the designated cell and the selected cell in the cluster, a predetermined MIMO mode of each user in the selected cell to an actual MIMO mode of the user.

8. The communication device according to claim 7, wherein the processor is further configured to:

randomly select a cell from the cluster, configure a MIMO mode for each user in the cell, and determine the cell where MIMO modes are configured for users as the designated cell; or determine, in the cluster, a cell where MIMO modes are already configured for users as the designated cell.

Calculate, under each predetermined MIMO mode combination in a cluster, throughput or an amount of interference of the cluster — 101

Set, in a predetermined MIMO mode combination corresponding to maximum throughput or a minimum amount of interference of the cluster, a predetermined MIMO mode of each user in the cluster to an actual MIMO mode of the user — 102

FIG. 1

Communication device

Processor — 201

FIG. 2

Determine a designated cell in a cluster — 301

Determine one or more cells other than the designated cell in the cluster as a selected cell and calculate total throughput or a total amount of interference of the designated cell and the selected cell under each predetermined MIMO mode combination of the selected cell — 302

Set, in a predetermined MIMO mode combination corresponding to maximum throughput or a minimum amount of interference of the designated cell and the selected cell in the cluster, a predetermined MIMO mode of each user in the selected cell to an actual MIMO mode of the user — 303

FIG. 3